# FASCICULE DE BREVET EUROPEEN

(11) **EP 0 919 093 B1**
(45) Date de publication et mention de la délivrance du brevet: **22.10.2003**
(21) Numéro de dépôt: 97935653.2
(22) Date de dépôt: 30.07.1997
(51) Int. Cl.: H04M 1/72, H04Q 7/32

(54) **EQUIPEMENT DE COMMUTATION ENTRE TERMINAUX DE RESEAUX TELEPHONIQUES DIFFERENTS**
KOMMUNIKATIONSEINRICHTUNG ZWISCHEN ENDGERÄTEN VERSCHIEDENARTIGER FERNSPRECHNETZE
EQUIPMENT FOR SWITCHING BETWEEN TERMINALS OF DIFFERENT TELEPHONE NETWORKS

(30) Priorité: 14.08.1996 FR 9610225
(43) Date de publication de la demande: 02.06.1999
(73) Titulaire: SAGEM SA, 75116 Paris (FR)
(72) Inventeur: SYKES, Francis, F-75014 Paris (FR); MARCHADIER, Bruno, F-95000 Cergy (FR)
(74) Mandataire: Bloch, Gérard
(86) Numéro de dépôt international: FR9701419
(87) Numéro de publication internationale: WO98007264

(56) Documents cités:
- WO-A-95/01070
- "METHOD FOR AUDIO MULTIPLEXING AND CONTROL" IBM TECHNICAL DISCLOSURE BULLETIN, vol. 38, no. 6, juin 1995, ARMONK, NY, US, pages 491-493, XP000520745

## Description

L'apparition des réseaux téléphoniques empruntant des voies radio, comme le réseau GSM, a offert aux usagers une grande souplesse de communication. Cependant, ces réseaux n'ont chacun qu'une couverture géographique limitée. En outre, tous ces réseaux, radio et RTC, sont différents en ce sens que les terminaux respectifs ne sont pas interchangeables.

Pour considérer le problème que s'est posé la demanderesse, un utilisateur dispose d'un terminal portatif GSM, et, à son domicile, d'un poste téléphonique relié au RTC. Or, lorsqu'il se trouve à son domicile et que, par commodité, il a déposé le terminal GSM sur un meuble, il peut en être éloigné et, au contraire, se trouver à proximité d'un autre terminal sur lequel on ne l'appelle pas.

WO 95 01070 A enseigne un équipement qui détecte la présence d'un terminal téléphonique mobile pour interdire l'arrivée de tout appel entrant sur celui-ci, ceci en commandant un renvoi des appels entrants du réseau de radiotéléphonie vers le réseau filaire et donc vers un poste fixe de l'équipement.

Une telle solution est évidemment exclue si les réseaux ne sont pas reliés ou ne sont pas prévus pour des renvois de l'un vers l'autre.

IBM Technical Disclosure Bulletin, vol. 38, n° 6, enseigne un terminal unique raccordé au réseau téléphonique commuté et à un réseau de radiotéléphonie cellulaire. Le terminal unique ne peut donc traiter qu'une communication et l'intérêt de la liaison radio est limité puisque le terminal est fixe.

Bref, la demanderesse s'est posé le problème de la quasi-interchangeabilité, au moins fonctionnelle, des terminaux.

A cet effet, l'invention concerne un équipement de commutation entre un premier terminal radio et un deuxième terminal de deux réseaux téléphoniques associés différents, respectivement, comportant des moyens de commutation commandés par un microprocesseur, agencés pour relier, par des liaisons filaires un connecteur de terminal fixe à un connecteur de ligne d'un des réseaux, d'une part, et, l'intermédiaire de moyens d'adaptation de signaux phoniques, à un connecteur de terminal mobile, d'autre part, et le microprocesseur de commande des moyens de commutation étant agencé pour être contrôlé par l'un des deux terminaux.

On peut donc renvoyer les appels d'un terminal sur l'autre. Pour un appel sortant, on peut en outre choisir le réseau présentant les caractéristiques techniques et/ou les tarifs les plus avantageux.

L'invention sera mieux comprise à l'aide de la description suivante d'un exemple de réalisation préférée de l'équipement de commutation de l'invention, en référence au dessin annexé, sur lequel :
- la figure 1 illustre très schématiquement la fonction de commutation de l'équipement, et
- la figure 2 est un schéma fonctionnel par blocs de celui-ci.

L'équipement de commutation représenté, référencé 1, est ici raccordé à une ligne téléphonique 2 du réseau RTC, à un poste téléphonique 3 de raccordement au RTC et à un combiné 4 pouvant se raccorder au réseau radio téléphonique GSM 5.

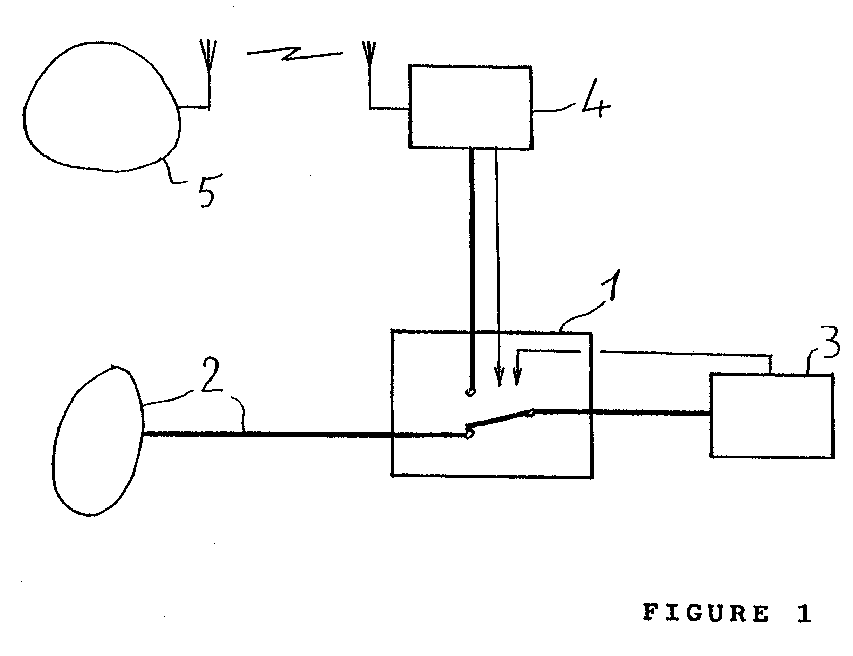

L'équipement de commutation 1 permet d'établir, au choix, une liaison entre le poste 3 et le réseau RTC 2 ou bien le réseau GSM 5 à travers le combiné 4, comme l'illustre la figure 1 et comme cela va être expliqué ci-dessous. Les deux liaisons se terminant par des flèches schématisent des commandes de commutation de l'équipement 1, provenant des terminaux respectifs 3 et 4.

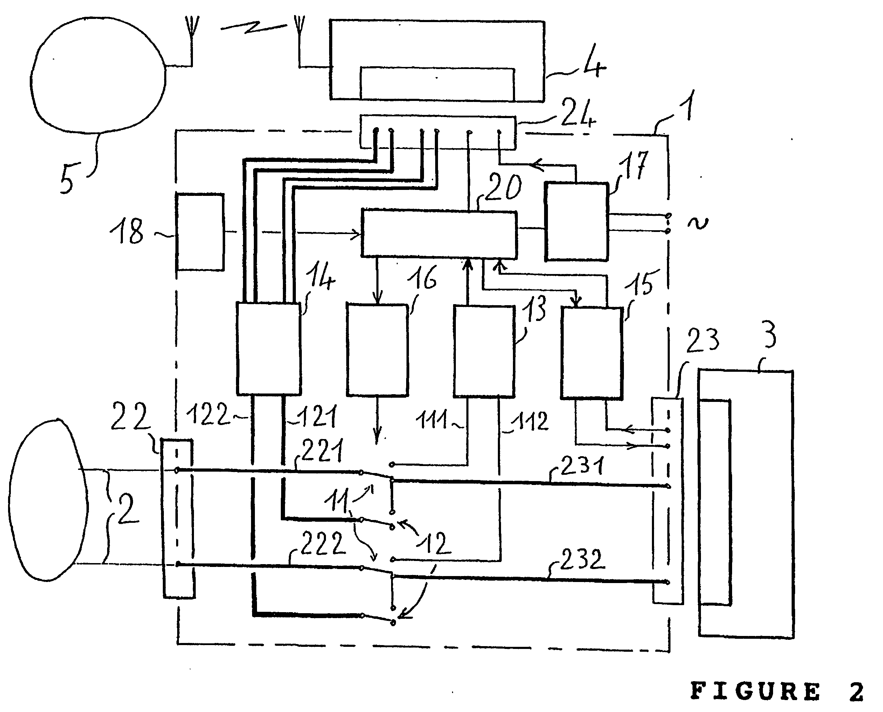

Comme le montre la figure 2, l'équipement 1, délimité par une ligne en pointillés, comporte un ensemble d'aiguillage, ou commutation, à deux relais 11, 12 identiques, dont la fonction principale vient d'être indiquée en regard de la figure 1. Pour la clarté du dessin, les terminaux 3 et 4 sont représentés déconnectés de l'équipement 1.

Bien que la figure 1 ne symbolise qu'un seul relais d'aiguillage, il est ici prévu une fonction annexe de détection de tension d'appel qui nécessite la présence de contacts supplémentaires appartenant au même relais ou, comme on l'a choisi ici pour mieux exposer la séparation des diverses fonctions d'aiguillage, appartenant à un second relais semblable. De ce fait, sur la figure 2, la fonction d'aiguillage de la figure 1 est représentée par des lames de relais 11, 12 inversées gauche-droite, comme cela est expliqué ci-dessous.

Le relais 11 comporte deux lames à deux positions de contact: repos/travail (2 RT) dont les deux extrémités pivot des lames mobiles sont respectivement reliées (221, 222) à un connecteur 22 de raccordement des deux fils de ligne 2. Les deux contacts repos correspondants sont reliés (231, 232) à un connecteur 23 de raccordement du poste 3, tandis que les deux contacts travail aboutissent (111, 112) à un circuit 13 de détection de tension d'appel.

Le relais 12 est relié, par des liaisons filaires 121, 122, à un circuit de conversion 2 fils/4 fils 14 par les extrémités pivot de ses deux lames. Les deux bornes travail correspondantes sont respectivement reliés aux liaisons 231, 232 vers le poste 3.

Le circuit 14 est relié, par deux paires de fils, respectivement d'émission et de réception, à un connecteur 24 de raccordement du combiné GSM 4.

Un microprocesseur 20, relié au connecteur 24, commande les relais 11, 12 à travers un circuit d'interface 16 et est relié en sortie du circuit détecteur 13. Le microprocesseur 20 est en outre relié au connecteur 23, de façon bidirectionnelle par des liaisons de transmission de données de type V24 et par un circuit 15 d'isolation assurant, tout comme les relais 11, 12, le détecteur 13 et le circuit de conversion 2 fils/4 fils 14, l'isolation galvanique entre la ligne RTC 2 et l'ensemble microprocesseur 20, connecteur 24. Le terminal GSM 4 se trouve ainsi isolé galvaniquement de la ligne RTC 2.

Un chargeur 17 de batterie, alimenté par le secteur, est relié au connecteur 24, pour recharger une batterie du combiné 4, et au microprocesseur 20, qui peut ainsi commander le chargeur 17 pour assurer à la charge un profil optimal au cours du temps.

Un contact du connecteur 24 relié au microprocesseur 20 fournit à celui-ci un signal indiquant la présence du combiné 4. La liaison entre ce dernier contact et le microprocesseur 20 est polarisée à la tension d'alimentation du microprocesseur 20 à travers une résistance de rappel et le combiné GSM 4 comporte un connecteur correspondant dont une lame est reliée à la masse et force ainsi à la masse la liaison ci-dessus lorsqu'il est raccordé.

Il est ici prévu un commutateur manuel 18 de commande du microprocesseur 20 pour commander l'ensemble de commutation 11, 12.

Dans cet exemple, le poste 3 est en fait constitué d'un téléphone sans fil et d'une base qui porte l'équipement 1 et un socle ou base réceptacle (24) du combiné GSM 4. Ce dernier est ainsi alimenté au moyen de cette base d'alimentation par le chargeur 17. Dans d'autres exemples, un ou plusieurs des connecteurs 22, 23, 24 peuvent être déportés, par une liaison filaire, optique telle qu'infrarouge, ou radio, par rapport au reste de l'équipement 1.

Il est en outre prévu une alimentation locale du poste 3, du genre du chargeur 17 avec éventuellement une batterie, reliée aux fils 121, 122 pour les polariser en tension continue d'alimentation du poste 3 lorsque ce dernier est isolé de la ligne RTC 2 par les relais de coupure / commutation 11, 12, qui renvoient le poste 3 sur l'alimentation locale ci-dessus.

Le fonctionnement de l'équipement de commutation 1 va maintenant être expliqué.

Dans un premier cas, au repos, en l'absence de toute communication téléphonique, un appel arrivant du RTC 2 traverse le relais 11 et fait sonner le poste 3 pour établir de façon classique la communication téléphonique. Dans cette phase, le combiné GSM 4 peut au besoin être déconnecté du connecteur 24 pour établir une liaison GSM entrante ou sortante, c'est-à-dire que les terminaux 3 et 4 sont indépendants l'un de l'autre.

Dans un deuxième cas, et toujours en partant de la position de repos, un appel entrant provenant du réseau GSM 5 traverse le combiné GSM 4 pour aboutir, lui-aussi, au poste téléphonique 3. Pour cela, les circuits de liaison phoniques du combiné GSM 4 (reliés au microphone et au haut-parleur de celui-ci) sont déportés vers le circuit 2 fils / 4 fils 14, d'adaptation des signaux phoniques, à travers le connecteur 24, et la liaison 2 fils aboutit au poste 3 à travers le relais 12 qui a été forcé en position travail par le microprocesseur 20. Le relais 11, de coupure, est de même commuté en position travail, ce qui isole la ligne RTC 2 par rapport au poste 3 alors occupé et la renvoie sur le détecteur 13 de tension d'appel, pour signaler un éventuel second appel entrant, provenant cette fois du RTC 2. En pareil cas, le microprocesseur 20 envoie une commande V24 de présence d'appel RTC vers le poste 3, qui émet un «bip» sonore vers l'usager. L'utilisateur du poste 3 peut alors "prendre" l'appel par action sur le commutateur 18, commandant les relais 11, 12. L'utilisateur peut terminer sa conversation sur le réseau RTC 2 puis recommuter l'aiguillage 11, 12 pour reprendre sa conversation sur le réseau GSM 5.

Le microprocesseur 20 est lui-même contrôlé à partir d'au moins l'un des terminaux 3 et 4. Dans cet exemple, le poste 3 recueille en fait l'ensemble des informations d'état des liaisons (appel entrant ou sortant sur RTC ou GSM) pour commander à lui seul le microprocesseur 20 et il comporte les logiciels correspondants. De ce fait, le combiné GSM 4 transfère au poste 3 toutes les informations liées aux communications GSM, ce transfert intervenant à travers le microprocesseur 20 qui, avec le circuit 15, relie les connecteurs 23 et 24. Dans cette phase, le microprocesseur 20 est transparent, c'est-à-dire qu'il transfère simplement ces informations sans les interpréter.

Dans un troisième cas, d'appels sortants, le poste 3 établit de façon classique une communication avec le RTC 2. Le commutateur 18 permet de commander l'aiguillage 11, 12 pour un appel sortant vers le réseau GSM 5.

On comprendra que le commutateur 18 a ici surtout un but didactique et que la commande d'aiguillage 11, 12 peut provenir de l'un et/ou de l'autre des terminaux 3 et 4, par action d'une touche de ceux-ci.

L'équipement de l'invention peut être adapté pour recevoir des terminaux téléphoniques de réseaux les plus divers, analogiques ou numériques, avec un convertisseur d'adaptation numérique/analogique si besoin était. Il peut en outre être prévu, au choix de l'utilisateur, un renvoi des appels entrants sur l'un ou bien l'autre des terminaux, par une modification de l'ensemble d'aiguillage à la portée de l'homme du métier.

## Revendications

1. Equipement de commutation entre un premier terminal radio (4) et un deuxième terminal (3) de deux réseaux téléphoniques associés différents (2, 5), respectivement, comportant des moyens de commutation (11, 12, 14), commandés par un microprocesseur (20), agencés pour relier, par des liaisons filaires (231, 232 ; 221, 222 ; 121, 122), un connecteur (23) de terminal fixe (3) à un connecteur (22) de ligne d'un des réseaux (2), d'une part, et, par l'intermédiaire de moyens (14) d'adaptation de signaux phoniques, à un connecteur (24) de terminal mobile (4), d'autre part, et le microprocesseur (20) de commande des moyens de commutation (11, 12, 14) étant agencé pour être contrôlé par l'un des deux terminaux (3, 4).

2. Equipement de commutation selon la revendication 1, dans lequel il est prévu des moyens de coupure (11) entre le deuxième terminal (3) et son réseau associé (2).

3. Equipement de commutation selon la revendication 2, dans lequel les moyens de coupure (11) sont agencés pour renvoyer ledit terminal (3) sur des moyens d'alimentation locale.

4. Equipement de commutation selon l'une des revendications 2 et 3, dans lequel les moyens de coupure (11) comportent un relais de liaison (11) à une ligne (2) du réseau téléphonique commuté.

5. Equipement de commutation selon la revendication 4, dans lequel les moyens de coupure sont agencés pour renvoyer la ligne (2) sur un détecteur de signaux d'appel (13).

6. Equipement de commutation selon l'une des revendications 1 à 5, dans lequel il est prévu des moyens (17) d'alimentation du terminal radio (4) comprenant une base de réception du terminal (4).

7. Equipement de commutation selon l'une des revendications 1 à 6, dans lequel l'un des connecteurs (24) comporte un contact de détection de présence de terminal (4).

8. Equipement de commutation selon l'une des revendications 1 à 7, dans lequel les moyens de commutation (14) sont agencés pour adapter les signaux phoniques entre un terminal GSM (4) et un terminal filaire (3) du réseau téléphonique commuté.

## Patentansprüche

1. Einrichtung zum Umschalten zwischen einem ersten Funk-Endgerät (4) und einem zweiten Endgerät (3), die zwei unterschiedlichen Telefonnetzen (2, 5) zugeordnet sind, aufweisend von einem Mikroprozessor (20) gesteuerte Umschaltmittel (11, 12, 14), die eingerichtet sind, um über Leitungsverbindungen (231, 232; 221, 222; 121, 122) einen Anschluss (23) eines festen Endgerätes (3) mit einem Leitungsanschluss (22) eines der Netze (2) einerseits und über Mittel (14) zur Anpassung von Audiosignalen mit einem Anschluss (24) eines mobilen Endgeräts (4) andererseits zu verbinden, und wobei der Mikroprozessor (20) zum Steuern der Umschaltmittel (11, 12, 14) so eingerichtet ist, dass er von dem einen der beiden Endgeräte (3, 4) gesteuert wird.

2. Umschalteinrichtung nach Anspruch 1, wobei Trennmittel (11) zwischen dem zweiten Endgerät (3) und dessen zugehörigem Netz (2) vorgesehen sind.

3. Umschalteinrichtung nach Anspruch 2, wobei die Trennmittel (11) so eingerichtet sind, dass sie das genannte Endgerät (3) auf lokale Versorgungsmittel umleiten.

4. Umschalteinrichtung nach einem der Ansprüche 2 und 3, wobei die Trennmittel (11) ein Verbindungsrelais (11) zu einer Leitung (2) des geschalteten Telefonnetzes aufweisen.

5. Umschalteinrichtung nach Anspruch 4, wobei die Trennmittel so eingerichtet sind, dass sie die Leitung (2) auf einen Rufsignal-Detektor (13) umleiten.

6. Umschalteinrichtung nach einem der Ansprüche 1 bis 5, wobei Mittel (17) zur Versorgung des Funk-Endgeräts (4) vorgesehen sind, die eine Empfangsbasis des Endgeräts (4) aufweisen.

7. Umschalteinrichtung nach einem der Ansprüche 1 bis 6, wobei einer der Anschlüsse (24) einen Kontakt zum Feststellen des Vorhandenseins des Endgeräts (4) aufweist.

8. Umschalteinrichtung nach einem der Ansprüche 1 bis 7, wobei die Umschaltmittel (14) so eingerichtet sind, dass sie die Audiosignale zwischen einem GSM-Endgerät (4) und einem drahtgebundenen Endgerät (3) des geschalteten Telefonnetzes anpassen können.

## Claims

1. Equipment for switching between a first radio terminal (4) and a second radio terminal (3) respectively of two different associated telephone networks (2, 5), comprising:
- switching means (11, 12, 14) controlled by a microprocessor (20), arranged for connecting by means of wire connections (231, 232; 221, 222; 121, 122) a connector (23) of a fixed terminal (3) to a line connector (22) of one of the networks (2), on the one hand, and, by means (14) for adapting audio signals, to a connector (24) of a mobile terminal (4), on the other hand, and
- the microprocessor (20) for controlling the switching means (11, 12, 14) being arranged for being controlled by one of the two terminals (3, 4).

2. Equipment according to claim 1, wherein cut-off means (11) are provided between the second terminal (3) and its associated network (2).

3. Equipment according to claim 2, wherein the cut-off means (11) are arranged to redirect said terminal (3) to local power supply means.

4. Equipment according to any one of claims 2 and 3, wherein the cut-off means (11) comprise a relay (11) connecting to a line (2) of the switched telephone network.

5. Equipment according to claim 4, wherein the cut-off means are arranged to transfer the line (2) to a calling signal detector (13).

6. Equipment according to any one of claims 1 to 5, wherein means (17) are provided for the power supply of the radio terminal (4) comprising a receiving base for the terminal (4).

7. Equipment according to any one of claims 1 to 6, wherein one of the connectors (24) is provided with a contact for detecting the presence of the terminal (4).

8. Equipment according to any one of claims 1 to 7, wherein the switching means (14) are arranged for adapting the audio signals between a GSM terminal (4) and a wire terminal (3) of the switched telephone network.
